# EUROPEAN PATENT SPECIFICATION

(11) **EP 4 075 990 B1**
(45) Date of publication and mention of the grant of the patent: **15.07.2026**
(21) Application number: 20842078.6
(22) Date of filing: 15.12.2020
(51) Int. Cl.: A23C 1/00, A23C 9/00, A23C 9/142, A23C 9/15

(54) **PREPARATION OF HIGH SOLIDS AND HIGH PROTEIN LACTOSE-FREE ASEPTIC MILK CONCENTRATES AND MILK POWDERS WITH FORWARD OSMOSIS**
HERSTELLUNG VON LAKTOSEFREIEN ASEPTISCHEN MILCHKONZENTRATEN UND MILCHPULVERN MIT HOHEM FESTSTOFF- UND PROTEINGEHALT MIT VORWÄRTSOSMOSE
PRÉPARATION DE CONCENTRÉS DE LAIT ASEPTIQUE SANS LACTOSE À HAUTE TENEUR EN SOLIDES ET À HAUTE TENEUR EN PROTÉINES ET DE POUDRES DE LAIT À OSMOSE DIRECTE

(30) Priority: 19.12.2019 US 201962950161 P
(43) Date of publication of application: 26.10.2022
(73) Proprietor: Fairlife, LLC, Chicago, IL 60607 (US)
(72) Inventor: UR REHMAN, Shakeel, Chicago, IL 60607 (US); DOELMAN, Timothy Peter, Chicago, IL 60607 (US)
(74) Representative: Bohest AG
(86) International application number: PCT/US2020/065131
(87) International publication number: WO 2021/126859

(56) References cited:
- WO-A1-2019/212704
- CN-A- 109 907 109
- US-A1- 2018 153 184
- US-A1- 2019 223 461
- PAL PARIMAL ET AL: "Development and analysis of a sustainable technology in manufacturing acetic acid and whey protein from waste cheese whey", JOURNAL OF CLEANER PRODUCTION, ELSEVIER, AMSTERDAM, NL, vol. 112, 26 July 2015 (2015-07-26), pages 59 - 70, XP029358274, ISSN: 0959-6526, DOI: 10.1016/J.JCLEPRO.2015.07.085

## Description

### REFERENCE TO RELATED APPLICATION

This application is being filed on 15 December 2020 as a PCT international patent application, and claims priority to U.S. Provisional Patent Application No. 62/950,161, filed on 19 December 2019.

### FIELD OF THE INVENTION

The present disclosure relates generally to concentrating dairy compositions, and more particularly, relates to the use of forward osmosis techniques to prepare high solids dairy compositions and dry or powder dairy compositions.

### BACKGROUND OF THE INVENTION

Membrane filtration processes are non-thermal fractionation and concentration technologies for fluids. When a fluid is passed through a semi-permeable membrane under pressure, the components that get retained on the surface of the membranes are called retentates or concentrates, while the materials that pass through the membrane are collectively called the permeate. Membrane technologies generally do not involve heat or chemicals for fractionation or concentration, and therefore do not adversely affect the properties of the fluid, which is beneficial for milk and its components. When fluids like milk are fractionated by these membrane technologies, typically proteins do not get denatured, enzymes do not get inactivated, vitamins are not destroyed, and reactions between proteins and sugars do not occur. WO 2019/212704 A1 uses membrane filtration methods for making dairy.

### SUMMARY OF THE INVENTION

This summary is provided to introduce a selection of concepts in a simplified form that are further described herein. This summary is not intended to identify required or essential features of the claimed subject matter. Nor is this summary intended to be used to limit the scope of the claimed subject matter.

Consistent with embodiments of this invention, a method for making an aseptic dairy composition is disclosed. This method can comprise (a) subjecting a dairy product to forward osmosis to form a dairy concentrate having at least about 35 wt. % solids, and (b) heat treating the dairy concentrate to form the aseptic dairy composition. Generally, the dairy concentrate can have from about 35 to about 60 wt. % solids, and more often, from about 40 to about 50 wt. % solids after step (a), and step (b) can comprise UHT sterilization conducted using indirect heating, direct steam injection, or direct steam infusion.

Beneficially, and unexpectedly, the forward osmosis step can remove over 50% of the water, and in some cases, up to 70-80% of the water from the dairy product, resulting in dairy concentrates with much high solids content than can be achieved with reverse osmosis. Subsequently, the concentrate can be dried to form a dry dairy powder composition.

Both the foregoing summary and the following detailed description provide examples and are explanatory only. Accordingly, the foregoing summary and the following detailed description should not be considered to be restrictive. Further, features or variations can be provided in addition to those set forth herein. For example, certain embodiments can be directed to various feature combinations and sub-combinations described in the detailed description.

### DEFINITIONS

To define more clearly the terms used herein, the following definitions are provided. Unless otherwise indicated, the following definitions are applicable to this disclosure. If a term is used in this disclosure but is not specifically defined herein, the definition from the IUPAC Compendium of Chemical Terminology, 2nd Ed (1997), can be applied, as long as that definition does not conflict with any other disclosure or definition applied herein, or render indefinite or non-enabled any claim to which that definition can be applied.

Herein, features of the subject matter are described such that, within particular aspects and/or embodiments, a combination of different features can be envisioned. For each and every aspect, and/or embodiment, and/or feature disclosed herein, all combinations that do not detrimentally affect the designs, compositions, processes, and/or methods described herein are contemplated with or without explicit description of the particular combination. Additionally, unless explicitly recited otherwise, any aspect, and/or embodiment, and/or feature disclosed herein can be combined to describe inventive designs, compositions, processes, and/or methods consistent with the present invention.

In this disclosure, while compositions and methods are often described in terms of "comprising" various components or steps, the compositions and methods also can "consist essentially of" or "consist of" the various components or steps, unless stated otherwise.

The terms "a," "an," and "the" are intended to include plural alternatives, e.g., at least one, unless otherwise specified. For instance, the disclosure of "an ingredient" is meant to encompass one ingredient, or mixtures or combinations of more than one ingredient, unless otherwise specified.

In the disclosed methods, the term "combining" encompasses the contacting or addition of components in any order, in any manner, and for any length of time, unless otherwise specified. For example, the components can be combined by blending or mixing.

The "lactose fraction" is meant to encompass a milk component fraction that is rich in lactose or any derivatives thereof, e.g., hydrolyzed, un-hydrolyzed, epimerized, isomerized, or converted to oligosaccharides, as would be recognized by one of skill in the art. Moreover, unless stated otherwise, this term also is meant to encompass glucose/galactose, such as may be produced by the treatment of lactose with lactase enzyme.

Although any methods and materials similar or equivalent to those described herein can be used in the practice or testing of the invention, the typical methods and materials are herein described.

Various numerical ranges are disclosed herein. When a range of any type is disclosed or claimed herein, the intent is to disclose or claim individually each possible number that such a range could reasonably encompass, including end points of the range as well as any sub-ranges and combinations of sub-ranges encompassed therein, unless otherwise specified. As a representative example, the present application discloses that a dairy product can have, in certain embodiments, from about 3 to about 10 wt. % protein. By a disclosure that the protein content of the dairy product can be in a range from about 3 to about 10 wt. %, the intent is to recite that the protein content can be any amount within the range and, for example, can be equal to about 3, about 4, about 5, about 6, about 7, about 8, about 9, or about 10 wt. %. Additionally, the dairy product can contain an amount of protein within any range from about 3 to about 10 wt. % (for example, from about 3 to about 6 wt. %), and this also includes any combination of ranges between about 3 and about 10 wt. %. Further, in all instances, where "about" a particular value is disclosed, then that value itself is disclosed. Thus, the disclosure of a protein content from about 3 to about 10 wt. % also discloses a protein content from 3 to 10 wt. % (for example, from 3 to 6 wt. %), and this also includes any combination of ranges between 3 and 10 wt. %. Likewise, all other ranges disclosed herein should be interpreted in a manner similar to this example.

The term "about" means that amounts, sizes, formulations, parameters, and other quantities and characteristics are not and need not be exact, but may be approximate including being larger or smaller, as desired, reflecting tolerances, conversion factors, rounding off, measurement errors, and the like, and other factors known to those of skill in the art. In general, an amount, size, formulation, parameter or other quantity or characteristic is "about" or "approximate" whether or not expressly stated to be such. The term "about" also encompasses amounts that differ due to different equilibrium conditions for a composition resulting from a particular initial mixture. Whether or not modified by the term "about," the claims include equivalents to the quantities. The term "about" can mean within 10% of the reported numerical value, preferably within 5% of the reported numerical value.

### DETAILED DESCRIPTION OF THE INVENTION

Methods for preparing high solids aseptic dairy compositions, according to the present claims, are disclosed and described herein. Such methods can utilize a forward osmosis step to produce a high solids dairy concentrate, followed by a heat treatment step to form the high solids aseptic dairy composition. Optionally, the dairy composition can be dried to form a dry dairy composition (also referred to herein as a dairy powder composition).

Forward osmosis (FO) is a low pressure membrane process in which the driving force for water transfer is the activity of water across a semipermeable membrane. The water transfer occurs from a feed side (low concentration of ions or low osmotic pressure) to a draw solution side (high concentration of ions or high osmotic pressure) across a semipermeable membrane until the osmotic pressure difference between both sides is close to zero. The advantages of forward osmosis over reverse osmosis are many. Forward osmosis uses low operating pressures, which reduces energy consumption. Forward osmosis is performed at lower temperatures - e.g., ambient temperature or lower - compared to thermal evaporation processes, which therefore prevents the quality degradation of milk components that may lead to discoloration, odor, and off-taste. Additionally, there is a better product recovery by forward osmosis compared to other filtration technologies, resulting in less environmental impact. The amount of fouling in forward osmosis is much lower and is reversible compared to other filtration technologies (in particular, reverse osmosis), resulting in cost and time savings for membrane cleaning and replacement.

Beneficially, and unexpectedly, dairy starting materials can be efficiently concentrated to far higher solids contents than can be accomplished using reverse osmosis. Transportation costs are reduced due to the high solids content of the resulting product. And lastly, the modules of forward osmosis are smaller in size than reverse osmosis and evaporation units.

Herein, several examples of the forward osmosis process are disclosed in which a reverse osmosis step is replaced by a forward osmosis step to concentrate a stream that can be obtained by the fractionation of milk components. Raw milk can be first subjected to fat separation, resulting in cream and skim milk. Then, skim milk can be subjected to ultrafiltration to produce an ultrafiltration retentate and an ultrafiltration permeate. The ultrafiltration permeate can then be subjected to nanofiltration, and the nanofiltration permeate then subjected to forward osmosis to concentrate the minerals. The water diffuses into a draw solution (e.g., 65% potassium lactate, brine, and the like) through a polymeric membrane while the minerals are concentrated on the other side of the membrane. The water from the diluted draw solution can be removed either by reverse osmosis or thermal evaporation. The recovered draw solution can be recycled for future use. The mineral content in dairy products often can be doubled, tripled, quadrupled, and so forth.

In other examples the ultrafiltration retentate and permeate can be concentrated by forward osmosis to 30-50 wt. % solids for improving efficiency of operations and transport. The concentrated ultrafiltration retentate can be characterized as a highly concentrated milk protein concentrate. The nanofiltration retentate can be concentrated from less than 15 wt. % solids to 50 wt. % solids, or more, to make a highly concentrated lactose product. Moreover, consistent with the methods disclosed herein, skim milk can be concentrated up to 48-50 wt. % solids by forward osmosis, and then spray dried to 95-97 wt. % solids.

In accordance with embodiments of this invention, methods for making an aseptic dairy composition can comprise (or consist essentially of, or consist of) (a) subjecting a dairy product to forward osmosis to form a dairy concentrate having at least about 35 wt. % solids, and (b) heat treating the dairy concentrate to form the aseptic dairy composition. Generally, the features of these methods (e.g., the characteristics of the dairy product, the characteristics of the dairy concentrate, the characteristics of the aseptic dairy composition, the heat treatment conditions, and the solids content, among others) are independently described herein and these features can be combined in any combination to further describe the disclosed methods. Moreover, other process steps can be conducted before, during, and/or after any of the steps listed in the disclosed methods, unless stated otherwise. Additionally, any aseptic dairy compositions (e.g., finished milk products, ready for consumption) produced in accordance with any of the disclosed methods are within the scope of this disclosure and are encompassed herein.

Filtration technologies (e.g., ultrafiltration, nanofiltration, forward osmosis, etc.) can separate or concentrate components in mixtures - such as milk - by passing the mixture through a membrane system (or selective barrier) under suitable conditions (e.g., pressure). The concentration/separation often can be based on molecular size. The stream that is retained by the membrane is called the retentate (or concentrate).

The dairy product in step (a) can comprise (or consist essentially of, or consist of) skim milk, or alternatively, whole milk. In some embodiments, the method can further comprise a step of separating (e.g., centrifugally separating) a raw milk or fresh milk (whole milk) into the dairy product (also referred to as skim milk) and a fat-rich fraction (also referred to as cream or butter fat). The raw milk or fresh milk (whole milk) can be cow's milk, which contains approximately 87 wt. % water, 3-4 wt. % protein, 4-5 wt. % carbohydrates/lactose, 3-4 wt. % fat, and 0.3-0.8 wt. % minerals. When the fresh or raw milk product is separated into the skim milk product and the fat-rich fraction, the fat-rich fraction typically contains high levels of fat (e.g., 20-50 wt. % fat, or 30-50 wt. % fat) and solids (e.g., 30-60 wt. %, or 40-55 wt. %), and often contains approximately 1.5-4 wt. % protein, 2-5 wt. % lactose, and 0.2-0.9 wt. % minerals, although not limited thereto.

Raw milk as such or after pasteurization can be concentrated by forward osmosis to make aseptic whole milk concentrates or milk powders. The forward osmosis process during powder manufacture eliminates the step of concentrating milk by heat evaporation under vacuum, since forward osmosis can match the concentration of milk solids obtained by thermal evaporation. The combined use of reverse osmosis and thermal evaporation of milk to concentrate milk before spray drying milk into milk powders can reduce energy costs and improve the quality of milk powders. However, forward osmosis can eliminate the steps of reverse osmosis and thermal evaporation during milk powder manufacture, which can further reduce energy costs and improve the quality of milk powders. During thermal evaporation, some of the volatiles of fresh milk are lost due to heat condensing under vacuum. Since no heat or vacuum is required during forward osmosis processing, the fresh milk volatiles will be retained in the powders ultimately obtained by using forward osmosis.

Representative examples of (milk-based) dairy products that can be utilized in the methods disclosed herein can include whole milk, low-fat milk, skim milk, buttermilk, flavored milk, low lactose milk, high protein milk, lactose-free milk, ultra-filtered milk, micro-filtered milk, or high protein, lactose-free skim milk, and the like.

The dairy product can have a protein content of from about 1 to about 15 wt. %, or from about 3 to about 10 wt. %. In some embodiments, the dairy product can have a protein content of from about 2 to about 8 wt. %, such as from about 3 to about 6 wt. % protein. Additionally or alternatively, the dairy product can have a fat content of from about 0.05 to about 10 wt. %, or from about 0.1 to about 5 wt. % fat. Additionally or alternatively, the dairy product can have a mineral content of from about 0.5 to about 2 wt. %, from about 0.5 to about 1.5 wt. %, or from about 0.5 to about 1 wt. % minerals. Additionally or alternatively, the dairy product can have a lactose content of less than or equal to about 6 wt. %, or less than or equal to about 4 wt. %, and in some embodiments, a lactose content of less than or equal to about 1 wt. %, or less than or equal to about 0.1 wt. % lactose.

Typical solids contents of the dairy product, prior to forward osmosis, can range from about 5 to about 15 wt. % solids, or from about 6 to about 12 wt. %. In some embodiments, the solids content of the dairy product can range from about 7 to about 10 wt. %, or from about 8 to about 10 wt. % solids.

A representative example of a dairy product consistent with this invention can contain less than or equal to about 0.5 wt. % fat, from about 2 to about 8 wt. % protein, from about 0.5 to about 2 wt. % minerals, and less than or equal to about 6 wt. % lactose. Another representative and non-limiting example of a dairy product consistent with this invention can contain from about 0.5 to about 1.5 wt. % fat, from about 2 to about 8 wt. % protein, from about 0.5 to about 2 wt. % minerals, and less than or equal to about 6 wt. % lactose. Yet, another representative example of a dairy product consistent with this invention can contain from about 1.5 to about 2.5 wt. % fat, from about 2 to about 8 wt. % protein, from about 0.5 to about 2 wt. % minerals, and less than or equal to about 6 wt. % lactose. Moreover, another representative example of a dairy product consistent with this invention can contain from about 2.5 to about 5 wt. % fat, from about 2 to about 8 wt. % protein, from about 0.5 to about 2 wt. % minerals, and less than or equal to about 6 wt. % lactose.

Optionally, the disclosed methods can further comprise a step of treating (combining) the dairy product before step (a) with lactase enzyme to form the dairy product having less than 0.1 wt. % lactose, and in some instances, less than 0.05 wt. % lactose, or less than 0.01 wt. % lactose. Thus, prior to forward osmosis, the dairy product can be combined with lactase enzyme to form a lactose-free dairy product. Alternatively, the dairy concentrate after forward osmosis step (a) - but before the heat treatment in step (b) - can be treated with lactase enzyme, or the aseptic dairy composition after step (b) can be treated with lactase enzyme. Lactase enzyme can be dosed into the aseptic dairy composition after ultra-high temperature heat treatment by the use of an aseptic dosing system. Typically, the treatment with lactase enzyme occurs prior to the forward osmosis step.

In step (a), the dairy product can be subjected to a forward osmosis step to produce a dairy concentrate, which typically has at least 35 wt. % solids. Additionally, water can be removed from the dairy product in the forward osmosis step to form a diluted draw solution. Forward osmosis is typically performed at much lower pressures (and uses less energy) than standard reverse osmosis, and utilizes a semi-permeable membrane system having pore sizes such that water passes through, while other materials (e.g., proteins, fats, lactose or other sugars, and minerals) do not. Operating pressures typically are less than about or equal to about 75 psig, less than or equal to about 60 psig, less than or equal to about 45 psig, less than or equal to about 30 psig, or less than or equal to about 15 psig. Illustrative and non-limiting ranges for the operating pressure of the forward osmosis step include from about 0 psig (atmospheric pressure) to about 75 psig, from about 0 psig to about 45 psig, from about 1 psig to about 60 psig, from about 1 psig to about 30 psig, from about 1 psig to about 15 psig, from about 10 psig to about 75 psig, from about 15 to about 60 psig, and the like.

The forward osmosis step can be conducted at a temperature in a range from about 5to about 50 °C; alternatively, from about 10 to about 40 °C; alternatively, from about 8 to about 25 °C; alternatively, from about 8 to about 20 °C; or alternatively, from about 5 to about 15 °C. Also not being limited thereto, forward osmosis membrane systems have a molecular weight cutoff of much less than 100 Da and, therefore, components other than water can be concentrated in the forward osmosis process (e.g., minerals). Generally, forward osmosis comprises a membrane system having pore sizes of less than or equal to about 0.001 µm.

As compared to reverse osmosis, the forward osmosis step consistent with embodiments of this invention can efficiently achieve higher solids content and higher minerals content. Further, there is less fouling during forward osmosis, as compared to reverse osmosis, and fouling can be removed easily, resulting in lower costs and less downtime for membrane cleaning and replacement. Moreover, forward osmosis systems generally are smaller in size and footprint than reverse osmosis systems, so retrofitting in small or congested spaces can be achieved.

Any suitable draw solution that has a higher concentration of solutes or ions than the solution from which water is to be drawn through a semipermeable membrane can be used for the forward osmosis step. Generally, a solution containing a high concentration of monovalent ions can be used, such as sodium, potassium, chloride, and the like, as well as combinations thereof. Additionally or alternatively, the draw solution can contain a high concentration of any suitable sugar, representative examples of which can include sucrose, glucose, galactose, lactose, fructose, maltose, and the like, as well as combinations thereof. In some embodiments, the draw solution can comprise potassium lactate and the like, while in other embodiments, the forward osmosis draw solution can comprise concentrated milk minerals. For instance, the forward osmosis draw solution can comprise from about 5 to about 60 wt. % milk minerals; alternatively, from about 10 to about 50 wt. % milk minerals; alternatively, from about 18 to about 32 wt. % milk minerals; alternatively, from about 0.3 to about 5 wt. % milk minerals; alternatively, from about 0.3 to about 3 wt. % milk minerals; or alternatively, from about 0.4 to about 1.5 wt. % milk minerals. The forward osmosis draw solution can comprise a RO retentate fraction in one embodiment, a NF permeate fraction of a UF permeate fraction in another embodiment, or a mixture or combination of the RO retentate fraction and the NF permeate fraction. In another embodiment, for instance, the draw solution can be a mineral concentrate prepared using reverse osmosis or prepared using forward osmosis. In another embodiment, the draw solution can be a mixture of a RO mineral concentrate and a NF permeate fraction of a UF permeate fraction or a concentrated NF permeate fraction. In yet another embodiment, the draw solution can be a hydrolyzed NF retentate fraction of a UF permeate fraction, optionally concentrated to a higher solids content.

The concentration difference between a feed stream (e.g., the dairy product) and the draw solution is used to remove water from the feed stream. Generally, forward osmosis removes water from a lower concentration solution (feed side) to a higher concentration solution (draw solution) by osmotic pressure, when there is a semipermeable membrane or barrier (e.g., a polymeric membrane) between the two solutions. Thus, solids, minerals, and other non-water components of the feed stream (e.g., the dairy product) are concentrated in forward osmosis, resulting in the dairy concentrate described herein.

In step (a), subjecting the dairy product to forward osmosis can form the dairy concentrate and a diluted draw solution. Optionally, the diluted draw solution resulting from forward osmosis can be subjected to a step of removing at least a portion of water from the diluted draw solution to form a draw solution. The draw solution can be re-used in the forward osmosis step. In one embodiment, removing at least a portion of water from the diluted draw solution can comprise subjecting the diluted draw solution to reverse osmosis. Reverse osmosis is a fine filtration process or concentration process in which substantially all components are retained (retentate) other than water, which passes through the reverse osmosis membrane. Often, reverse osmosis membrane systems have a molecular weight cutoff of much less than 100 Da and, therefore, components other than water are concentrated in the reverse osmosis process (e.g., minerals). Generally, reverse osmosis comprises a membrane system having pore sizes of less than or equal to about 0.001 µm. Operating pressures typically are in the 450-1500 psig, or 450-600 psig, range. Temperatures ranging from about 5 to about 45 °C, or from about 15 to about 45 °C, often can used.

Alternatively, removing at least a portion of water from the diluted draw solution can comprise subjecting the diluted draw solution to evaporation. While not limited thereto, temperatures of greater than 50 °C often are employed, as well as sub-atmospheric pressures. Whether evaporation or reverse osmosis, the resulting water fraction is substantially free of all of the milk components and draw solution components (from forward osmosis). Thus, the water fraction can be substantially all water, for instance, at least about 99 wt. % water, at least about 99.5 wt. % water, or at least about 99.8 wt. % water.

Beneficially, the dairy concentrate after forward osmosis (or the aseptic dairy composition) can have a wt. % solids content that is - unexpectedly - significantly greater than that of a wt. % solids content that can be achieved by using reverse osmosis. The dairy concentrate (or the aseptic dairy composition) can have at least about 35 wt. % solids, at least about 37 wt. % solids, at least about 38 wt. % solids, at least about 40 wt. % solids, or at least about 42 wt. % solids, and generally, less than or equal to about 60 wt. % solids, less than or equal to about 55 wt. % solids, less than or equal to about 50 wt. % solids, or less than or equal to about 48 wt. % solids. Representative and non-limiting ranges for the solids content of the dairy concentrate (or the aseptic composition) can include from about from 35 to about 60 wt. % solids, from about 35 to about 50 wt. % solids, from about 35 to about 48 wt. % solids, from about 38 to about 48 wt. % solids, from about 40 to about 55 wt. % solids, from about 40 to about 50 wt. % solids, from about 42 to about 55 wt. % solids, and the like.

Unexpectedly, the forward osmosis step disclosed herein is a very effective technique for increasing the solids content (or the protein content, or the mineral content) of the incoming dairy product feed stream. Concentration factors of at least about 2, at least about 3, at least about 3.5, at least about 4, at least about 4.5, and at least about 5, can be achieved via the forward osmosis step disclosed herein, and the concentration factor can be as much as about 6, 7, 8, 9, or 10. These concentration factors are applicable on a wt. % solids basis, as well as on a wt. % protein and a wt. % minerals basis. For example, subjecting a dairy product having 0.8 wt. % minerals, 3.4 wt. % protein, and 9.2 wt. % solids to forward osmosis, resulting in a dairy concentrate (or aseptic dairy composition) having 3.6 wt. % minerals, 17 wt. % protein, and 44 wt. % solids, would translate to a concentration factor of 4.5 based on minerals, a concentration factor of 5 based on protein, and a concentration factor of 4.8 based on solids.

The forward osmosis step can lead to significant volume reduction of (e.g., water removal from) the dairy product. For instance, the volume of the dairy concentrate (or the aseptic dairy composition) can be less than or equal to about 60% of the volume of the dairy product; alternatively, less than or equal to about 50% of the volume of the dairy product; alternatively, less than or equal to about 40% of the volume of the dairy product; alternatively, less than or equal to about 30% of the volume of the dairy product; or alternatively, less than or equal to about 20-25% of the volume of the dairy product. As shown in the constructive example comparing traditional reverse osmosis and forward osmosis (see **Table VI**), forward osmosis can remove 87% of water from skim milk, as compared to removal of only 67% water by traditional reverse osmosis.

The dairy concentrate (or the aseptic dairy composition) can have a protein content of from about 12 to about 32 wt. %, or from about 14 to about 28 wt. %. In some embodiments, the dairy concentrate (or the aseptic dairy composition) can have a protein content of from about 12 to about 20 wt. %, or from about 20 to about 30 wt. % protein. Additionally or alternatively, the dairy concentrate (or the aseptic dairy composition) can have a fat content of from about 0.05 to about 10 wt. %, or from about 0.1 to about 5 wt. % fat. Additionally or alternatively, the dairy concentrate (or the aseptic dairy composition) can have a mineral content of from about 2 to about 5 wt. %, from about 2.2 to about 4.8 wt. %, or from about 2.5 to about 4.5 wt. % minerals. Additionally or alternatively, the dairy concentrate (or the aseptic dairy composition) can have a carbohydrate content of from about 2 to about 30 wt. %, such as from about 5 to about 15 wt. %, or from about 20 to about 30 wt. % carbohydrates.

As discussed herein, after forward osmosis, the dairy concentrate (and therefore, the aseptic dairy composition) can have very high solids contents, which typically fall in the ~35-60 wt. % range. For instance, in one embodiment, the dairy concentrate (or the aseptic dairy composition) can have a solids content of from about 38 to about 50 wt. %, while in another embodiment, the dairy concentrate (or the aseptic dairy composition) can have a solids content of from about 40 to about 55 wt. %.

The mineral content of the dairy concentrate (and the aseptic dairy composition) is increased significantly via forward osmosis. For specific minerals in the dairy concentrate (or the aseptic dairy composition), the sodium content can range from about 800 to about 2000 ppm by weight (or from about 1000 to about 1800 ppm), while the potassium content can range from about 5000 to about 9500 ppm (or from about 6000 to about 9000 ppm), and the calcium content can range from about 3000 to about 8000 ppm (or from about 4000 to about 7000 ppm).

In step (b) of the methods disclosed herein, the dairy concentrate can be heat treated to form the aseptic dairy composition. In one embodiment, the step of heat treating can comprise pasteurizing at a temperature in a range from about 80 °C to about 95 °C for a time period in a range from less than one minute up to about 15 minutes, such as from about 2 to about 15 minutes. In another embodiment, the step of heat treating can comprise UHT sterilization at a temperature in a range from about 135 °C to about 145 °C for a time period in a range from about 1 to about 10 seconds. In yet another embodiment, the step of heat treating can comprise UHT sterilization at a temperature in a range from about 148 °C to about 165 °C for a time period in a range from about 0.05 to about 1 sec, for example, from about 150 °C to about 155 °C for a time period in a range from about 0.08 to about 0.2 sec. Other appropriate pasteurization or sterilization temperature and time conditions are readily apparent from this disclosure. Further, this invention is not limited by the method or equipment used for performing the pasteurization/sterilization process - any suitable technique and apparatus can be employed, whether operated batchwise or continuously.

Typical UHT sterilization techniques include indirect heating, direct steam injection, direct steam infusion, and the like. For indirect heating, the dairy concentrate is not contacted directly with the heat source or heating medium, e.g., like a heat exchanger. Due to the heat transfer limitations, indirect heating requires a longer time for sterilization. Beneficially, in aspects of this invention, the dairy concentrate is heat treated using direct UHT sterilization. In direct steam injection, high temperature steam is injected into the pipe or other vessel containing the dairy concentrate, thus rapidly sterilizing the dairy concentrate. Direct steam injection generally is performed continuously - a continuous flow of the dairy concentrate is combined with a continuous injection of steam. In direct steam infusion, the dairy concentrate is sprayed into a chamber containing steam, thus rapidly and uniformly sterilizing the dairy concentrate. Like direct steam injection, direct steam infusion generally is performed continuously. After the heat treatment step, the aseptic dairy composition can be cooled to any suitable temperature, such as in a range from about 5 °C to about 40 °C, or from about 10 °C to about 30 °C.

Optionally, the disclosed methods can further comprise a step of combining an ingredient with the aseptic dairy composition. Examples of suitable ingredients can include a sugar/sweetener, a flavorant, a preservative (e.g., to prevent yeast or mold growth), a stabilizer, an emulsifier, a prebiotic substance, a probiotic bacteria, a vitamin, a mineral, an omega 3 fatty acid, a phyto-sterol, an antioxidant, or a colorant, and the like, as well as any mixture or combination thereof.

Any suitable vessel and conditions can be used for any combining step disclosed herein, and such can be accomplished batchwise or continuously. As an example, the aseptic dairy composition can be combined in a suitable vessel (e.g., a tank, a silo, etc.) under atmospheric pressure with an ingredient (or ingredients) to form a batch of a finished dairy composition. As another example, the aseptic composition and the ingredient (or ingredients) can be combined continuously in a pipe or other suitable vessel under slight pressure (e.g., 5-50 psig), and the finished dairy composition can be transferred to a storage tank or filled into containers for retail distribution and sale. Representative systems that can be used for this continuous combining, mixing, and/or packaging can include tetra aldose systems and tetra flexidose systems. Other appropriate methods, systems, and apparatus for combining the aseptic composition and other ingredients are readily apparent from this disclosure.

In some embodiments of this invention, after the heat treatment step, the method can further comprise a step of packaging (aseptically) the aseptic dairy composition (with or without additional ingredients) in any suitable container and under any suitable conditions. Any suitable container can be used, such as might be used for the distribution and/or sale of dairy products in a retail outlet. Illustrative and non-limiting examples of typical containers include a cup, a bottle, a bag, or a pouch, and the like. The container can be made from any suitable material, such as glass, metal, plastics, and the like, as well as combinations thereof.

In accordance with embodiments of this invention, methods for making a dairy powder composition are disclosed, and such methods can comprise (or consist essentially of, or consist of) (a) subjecting a dairy product to forward osmosis to form a dairy concentrate having at least about 35 wt. % solids, (b) heat treating the dairy concentrate to form an aseptic dairy composition, and (c) drying the aseptic dairy composition to form the dairy powder composition (or dry dairy compositions). Any dairy powder compositions (e.g., milk powder products) produced in accordance with any of the disclosed methods are within the scope of this disclosure and are encompassed herein.

In these methods, the drying in step (c) can include any suitable drying technique, such as spray drying. If desired, these methods can further comprise a step of instantizing and/or agglomerating after the drying step.

### EXAMPLES

The invention is further illustrated by the following examples, which are not to be construed in any way as imposing limitations to the scope of this invention. Various other aspects, embodiments, modifications, and equivalents thereof which, after reading the description herein, can suggest themselves to one of ordinary skill in the art without departing from the scope of the appended claims.

Total solids (wt. %) was determined in accordance with procedure SMEDP 15.10 C by CEM Turbo Solids and Moisture Analyzer (CEM Corporation, Matthews, North Carolina). Ash is the residue remaining after ignition in a suitable apparatus at 550 °C to a constant weight; such treatment at 550 °C typically eliminates all organic matter, with the remaining material being primarily minerals (Standard Methods for the examination of dairy products, 17th edition (2004), American Public Health Association, Washington DC). The ash test was performed by using a Phoenix (CEM Microwave Furnace), which heated the samples at 550 °C for 30 min. The ash content (also referred to herein as mineral content) was determined in wt. %.

Specific Ca, Mg, Na, and K contents were determined using a Perkin Elmer Atomic Absorption Spectrophotometer. Samples were treated with trichloroacetic acid to precipitate proteins and the filtrate was analyzed by the Atomic Absorption Spectrophotometer. Phosphorus content was determined via Inductively Coupled Plasma Spectrometry (official method of Analysis of AOAC, International 8th edition, methods 965.17 and 985.01).

### EXAMPLE 1

Example 1 summarizes an experiment to produce a high protein milk concentrate. Raw high protein lactose-free skim milk was prepared by a membrane filtration process (ultrafiltration, nanofiltration, reverse osmosis), pasteurized at 77 °C for 15 seconds, and then collected in 10-L pre-sterilized plastic bags and stored below 7 °C prior to use. **Table I** summarizes the composition of the high protein skim milk, and **Table II** summarizes the respective Ca, Mg, Na, K, and P contents (in ppm by weight) in the high protein skim milk. In **Table I,** the mineral content (in wt. %) is substantially the same as the ash content (wt. %), and thus the result of an ash test is used for quantification of the total mineral content in this disclosure.

The high protein skim milk was subjected to forward osmosis using a Ederna Micro-Pilot unit (Toulouse Cedex 1, France) with an Ederna draw solution containing a high concentration of potassium lactate. The membrane used was a spiral wound cellulose triacetate membrane (Edema, France). The operating pressure was less than 4 bar, and the temperature during forward osmosis was maintained at less than 14 °C. **Table I** summarizes the resulting composition of the forward osmosis (FO) concentrate of the high protein skim milk, and **Table II** summarizes the respective Ca, Mg, Na, K, and P contents (in ppm by weight) in the FO concentrate. This high protein FO concentrate was sterilized at 142 °C for 4 seconds to make an aseptic high protein composition.

Beneficially, the protein, mineral, and solids contents were significantly increased with the forward osmosis step. As shown in **Table I,** the high protein skim milk contained 5.7 wt. % protein, 0.78 wt. % minerals, and 9.2 wt. % solids, and the FO concentrate contained 25.35 wt. % protein, 3.9 wt. % minerals, and 39.7 wt. % solids. This translates to unexpectedly high concentration factors of 4.4 based on protein, 5 based on minerals, and 4.3 based on solids. Further, the respective mineral contents of the FO concentrate in **Table II** also were significantly increased: unexpectedly high concentration factors of 5.2 based on calcium, 5.9 based on sodium, and 5.3 based on potassium.

The solids content of the FO concentrate in Example 1 was approximately 40 wt. %. Similar experiments using reverse osmosis - instead of forward osmosis - could only achieve approximately 20-22 wt. % solids, using the same high protein skim milk starting material. Thus, unexpectedly, forward osmosis was able to provide 80-100% higher concentrations (much high solids content, mineral content, protein content, etc.) than reverse osmosis.

### EXAMPLE 2

Example 2 summarizes an experiment to produce milk powder from a forward osmosis concentrate. Forward osmosis was performed as described in Example 1. A high protein lactose-free skim milk, as shown in **Table III,** was concentrated by forward osmosis process from 9.2 wt. % solids to 26.8 wt. % solids (concentration factors of 2.9 based on protein, 3 based on minerals, and 2.9 based on solids), and this FO concentrate was warmed to 40 °C, stirred to get a homogenous mixture, and then spray dried (inlet temperature on dryer 185 °C; outlet temperature 85-90 °C; wheel speed 25,000 rpm; feed rate 260 mL/min). **Table IV** summarizes the respective Ca, Mg, Na, K, and P contents (in ppm by weight). The dried product was a free-flowing powder, with no clumping, off-odors or discoloration. The color of the product was slightly off-white. There was a small amount of brown scorched particles in the bottom of the powder bag, which can most likely be attributed to overheating of milk/milk powder particles during the drying process, often due to burn-on, friction effects in the atomizer zone and rotary valves, adherence to drier chambers walls, and/or depositions around the air distributor. The high protein lactose-free skim milk powder was stored in cool and dark conditions until reconstituted. Importantly, no thermal evaporation - or related technique - was used to concentrate the milk product prior to spray drying, only forward osmosis.

This high protein lactose-free skim milk powder was reconstituted by recombining with water and cream to produce a high protein lactose-free milk, and was compared with commercial fluid high protein milk (control). The compositions were very similar.

### EXAMPLE 3

Example 3 summarizes an experiment to produce a concentrated skim milk product from conventional skim milk. Forward osmosis was performed as described in Example 1, except at a temperature of 45 °C. **Table V** summarizes the compositions of regular skim milk and the high solids skim milk concentrate prepared by forward osmosis. Beneficially, the protein, mineral, and solids contents were significantly increased with the forward osmosis step. As shown in **Table V,** the skim milk contained 3.36 wt. % protein, 0.78 wt. % minerals, and 9.34 wt. % solids, and the FO concentrate contained 16.1 wt. % protein, 3.59 wt. % minerals, and 44.57 wt. % solids. This translates to unexpectedly high concentration factors of 4.8 based on protein, 4.6 based on minerals, and 4.8 based on solids. This skim milk FO concentrate was sterilized using direct UHT at 142 °C for 4 seconds to make an aseptic high solids composition. Subsequently, the high solids and high protein milk concentrate was dried to obtain a high protein milk powder.

The solids content of the FO concentrate in Example 3 was 44-45 wt. %. Similar experiments using reverse osmosis - instead of forward osmosis - could only achieve approximately 20-22 wt. % solids, using the same skim milk starting material. Thus, unexpectedly, forward osmosis was able to provide 100% higher concentrations (much high solids content, mineral content, protein content, etc.) than reverse osmosis.

### CONSTRUCTIVE EXAMPLE 4

Constructive Example 4 compares the amount of water that can be removed from skim milk using forward osmosis, as described herein, as compared to traditional reverse osmosis in the dairy industry. **Table VI** summarizes the calculated results based on reverse osmosis (concentration factor of 2.55) and forward osmosis (concentration factor of 4.94). Not only is the wt. % solids for forward osmosis almost double that of the reverse osmosis, but forward osmosis can remove 87 wt. % of water from skim milk, as compared to only 67 wt. % water by traditional reverse osmosis.

**Table I. Summary of Example 1 compositions.**

| Product | Fat (wt. %) | Protein (wt. %) | Carbohydrates (wt. %) | Minerals (wt. %) | Total Solids (wt. %) |
|---|---|---|---|---|---|
| High protein Skim milk | 0.18 | 5.70 | 2.57 | 0.78 | 9.2 |
| High protein Skim milk (FO Concentrate) | 0.80 | 25.35 | 8.93 | 3.9 | 39.7 |

**Table II. Summary of Example 1 mineral components.**

| Product | Calcium (ppm) | Magnesium (ppm) | Sodium (ppm) | Potassium (ppm) | Phosphorus (ppm) |
|---|---|---|---|---|---|
| High protein Skim milk | 1272 | 101 | 287 | 1587 | 1904 |
| High protein Skim milk (FO Concentrate) | 6670 | 460 | 1690 | 8470 | 3860 |

**Table III. Summary of Example 2 compositions.**

| Product | Fat (wt. %) | Protein (wt. %) | Carbohydrates (wt. %) | Minerals (wt. %) | Total Solids (wt. %) |
|---|---|---|---|---|---|
| High protein Lactose Free Skim milk | 0.17 | 5.61 | 2.45 | 0.92 | 9.2 |
| High protein Lactose-Free Skim milk (FO Concentrate) | 0.55 | 16.36 | 7.10 | 2.79 | 26.8 |
| High protein Lactose-Free Skim Milk Powder | 1.61 | 59.02 | 24.26 | 9.46 | 94.9 |
| Reconstituted Reduced fat High Protein Lactose Free Milk from Powder | 1.86 | 5.06 | 2.29 | 0.82 | 10.1 |
| Fluid 2% Milk (Control) | 1.85 | 5.29 | 2.64 | 0.78 | 10.6 |

**Table IV. Summary of Example 2 mineral components.**

| Product | Calcium (ppm) | Magnesium (ppm) | Sodium (ppm) | Potassium (ppm) | Phosphorus (ppm) |
|---|---|---|---|---|---|
| High protein Lactose Free Skim milk | 1572 | 117 | 377 | 2097 | 1114 |
| High protein Lactose-Free Skim milk (FO Concentrate) | 4420 | 310 | 1120 | 6400 | 3150 |
| High protein Lactose-Free Skim Milk Powder | 16200 | 1070 | 3770 | 20600 | 11600 |
| Reconstituted Reduced fat High Protein Lactose Free Milk from Powder | 1330 | 130 | 370 | 1690 | 940 |
| Fluid 2% Milk (Control) | 1534 | 110 | 478 | 1597 | 1160 |

**Table V. Summary of Example 3 compositions.**

| Product | Fat (wt. %) | Protein (wt. %) | Carbohydrates (wt. %) | Minerals (wt. %) | Total Solids (wt. %) |
|---|---|---|---|---|---|
| Regular Skim milk | 0.09 | 3.36 | 5.19 | 0.78 | 9.34 |
| Skim milk (FO Concentrate) | 0.51 | 16.1 | 24.36 | 3.59 | 44.57 |

**Table VI. Summary of Constructive Example 4.**

| Product | Quantity (kg) | Concentration Factor | Total Solids (wt. %) | Water (wt. %) | Water Removed per 100 kg Skim Milk (kg) | Water Removed (wt. %) |
|---|---|---|---|---|---|---|
| Skim milk | 100 | - | 9 | 91 | 0 | 0 |
| Reverse osmosis concentrate | 39.21 | 2.55 | 23 | 77 | 60.79 | 66.8 |
| Forward osmosis concentrate | 20.24 | 4.94 | 44.5 | 55.5 | 79.76 | 87.6 |

## Claims

1. A method for making an aseptic dairy composition, the method comprising:
(a) subjecting a dairy product to forward osmosis at a concentration factor of at least 2, at least 3, at least 3.5, at least 4, at least 4.5, or at least 5, based on wt. % minerals; and
a concentration factor of less than or equal to 10, less than or equal to 8, less than or equal to 7, or less than or equal to 6, based on wt. % minerals, to form a dairy concentrate having at least 35 wt. % solids; and
(b) heat treating the dairy concentrate to form the aseptic dairy composition.

2. The method of claim 1, wherein the dairy concentrate and the aseptic dairy composition contain:
at least 37 wt. % solids, at least 38 wt. % solids, at least 40 wt. % solids, or at least 42 wt. % solids; and
less than or equal to 60 wt. % solids, less than or equal to 55 wt. % solids, less than or equal to 50 wt. % solids, or less than or equal to 48 wt. % solids.

3. The method of claim 1 or 2, wherein step (a) is conducted at:
a pressure of less than or equal to 15 psig (103 kPa), a pressure of less than or equal to 30 psig (207 kPa), a pressure of less than or equal to 45 psig (310 kPa), a pressure of less than or equal to 60 psig (414 kPa), or a pressure of less than or equal to 75 psig (517 kPa); and
a temperature in a range from 5 to 50 °C, a temperature in a range from 10 to 40 °C, a temperature in a range from 8 to 25 °C, a temperature in a range from 8 to 20 °C, or a temperature in a range from 5 to 15 °C.

4. The method of any one of the preceding claims, wherein step (a) is conducted at:
a concentration factor of at least 2, a concentration factor of at least 3, a concentration factor of at least 3.5, a concentration factor of at least 4, a concentration factor of at least 4.5, or a concentration factor of at least 5, based on wt. % solids; and a concentration factor of less than or equal to 10, a concentration factor of less than or equal to 8, a concentration factor of less than or equal to 7, or a concentration factor of less than or equal to 6, based on wt. % solids; and
a concentration factor of at least 2, a concentration factor of at least 3, a concentration factor of at least 3.5, a concentration factor of at least 4, a concentration factor of at least 4.5, or a concentration factor of at least 5, based on wt. % protein; and a concentration factor of less than or equal to 10, a concentration factor of less than or equal to 8, a concentration factor of less than or equal to 7, or a concentration factor of less than or equal to 6, based on wt. % protein.

5. The method of any one of the preceding claims, wherein the concentration factor, based on wt. % minerals, is at least 3, at least 3.5, at least 4, at least 4.5, at least 5; and less than or equal to 8, less than or equal to 7, or less than or equal to 6.

6. The method of any one of the preceding claims, wherein a volume of the dairy concentrate is:
less than or equal to 60% of a volume of the dairy product;
less than or equal to 50% of a volume of the dairy product;
less than or equal to 40% of a volume of the dairy product;
less than or equal to 30% of a volume of the dairy product; or
less than or equal to 25% of a volume of the dairy product.

7. The method of any one of the preceding claims, wherein the step of heat treating comprises UHT sterilization at a temperature in a range from 135 °C to 145 °C for a time period in a range from 1 to 10 seconds, UHT sterilization at a temperature in a range from 148 °C to 165 °C for a time period in a range from 0.05 to 1 sec, or UHT sterilization at a temperature in a range from 150 °C to 155 °C for a time period in a range from 0.08 to 0.2 sec.

8. The method of any one of claims 1-7, wherein the step of heat treating comprises UHT sterilization conducted using indirect heating or UHT sterilization conducted using direct steam injection.

9. The method of any one of claims 1-7, wherein the step of heat treating comprises UHT sterilization conducted using direct steam infusion.

10. The method of any one of the preceding claims, wherein the dairy product has:
a fat content of from 0.05 to 10 wt. %, or a fat content of from 0.1 to 5 wt. %;
a protein content of from 1 to 15 wt. %, a protein content of from 3 to 10 wt. %, a protein content of from 2 to 8 wt. %, or a protein content of from 3 to 6 wt. %;
a mineral content of from 0.5 to 2 wt. %, a mineral content of from 0.5 to 1.5 wt. %, or a mineral content of from 0.5 to 1 wt. %;
a lactose content of less than or equal to 6 wt. %, a lactose content of less than or equal to 4 wt. %, a lactose content of less than or equal to 1 wt. %, or a lactose content of less than or equal to 0.1 wt. %; and
a solids content of from 5 to 15 wt. %, a solids content of from 6 to 12 wt. %, a solids content of from 7 to 10 wt. %, or a solids content of from 8 to 10 wt. %.

11. The method of any one of the preceding claims, wherein the forward osmosis step is conducted using a membrane system having pore sizes of less than or equal to 0.001 µm.

12. The method of any one of the preceding claims, wherein the forward osmosis step utilizes a forward osmosis draw solution comprising:
from 0.4 to 1.5 wt. % milk minerals;
from 0.3 to 3 wt. % milk minerals;
from 0.3 to 5 wt. % milk minerals;
from 18 to 32 wt. % milk minerals;
from 10 to 50 wt. % milk minerals; or
from 5 to 60 wt. % milk minerals.

13. The method of any one of the preceding claims, wherein the forward osmosis step utilizes a forward osmosis draw solution comprising a RO retentate fraction, a NF permeate fraction of a UF permeate fraction, or a combination thereof.

14. The method of any one of the preceding claims, wherein:
step (a) comprises subjecting the dairy product to forward osmosis to form the dairy concentrate and a diluted draw solution; and
the method further comprises (c) removing at least a portion of water from the diluted draw solution to form a draw solution.

15. The method of any one of the preceding claims, wherein the dairy concentrate and the aseptic dairy composition have:
a fat content of from 0.05 to 10 wt. %, or a fat content of from 0.1 to 5 wt. %;
a protein content of from 12 to 32 wt. %, a protein content of from 14 to 28 wt. %, a protein content of from 12 to 20 wt. %, or a protein content of from 20 to 30 wt. %;
a mineral content of from 2 to 5 wt. %, a mineral content of from 2.2 to 4.8 wt. %, or a mineral content of from 2.5 to 4.5 wt. %;
a carbohydrate content of from 2 to 30 wt. %, a carbohydrate content of from 5 to 15 wt. %, or a carbohydrate content of from 20 to 30 wt. %; and
a solids content of from 35 to 60 wt. %, a solids content of from 38 to 50 wt. %, or a solids content of from 40 to 55 wt. %.

16. The method of any one of the preceding claims, wherein the dairy concentrate and the aseptic dairy composition have:
a sodium content of from 800 to 2000 ppm;
a potassium content of from 5000 to 9500 ppm;
a calcium content of from 3000 to 8000 ppm;
or any combination thereof.

17. A method for making a dairy powder composition, the method comprising:
the method of any one of claims 1-16; and
spray drying the aseptic dairy composition to form the dairy powder composition.

## Patentansprüche

1. Verfahren zur Herstellung einer aseptischen Milchzusammensetzung, wobei das Verfahren umfasst:
(a) Unterziehen eines Milchprodukts einer Vorwärtsosmose bei einem Konzentrationsfaktor von mindestens 2, mindestens 3, mindestens 3,5, mindestens 4, mindestens 4,5 oder mindestens 5, bezogen auf den Massenanteil der Mineralstoffe; und
einem Konzentrationsfaktor von höchstens 10, höchstens 8, höchstens 7 oder höchstens 6, bezogen auf den Massenanteil der Mineralstoffe, zur Bildung eines Milchkonzentrats mit einem Massenanteil von mindestens 35% an Trockensubstanz; und
(b) Wärmebehandlung des Milchkonzentrats zur Bildung der aseptischen Milchzusammensetzung.

2. Verfahren nach Anspruch 1, wobei das Milchkonzentrat und die aseptische Milchzusammensetzung enthalten:
mindestens 37 % Massenanteil an Trockensubstanz, mindestens 38 % Massenanteil a Trockensubstanz, mindestens 40 % Massenanteil an Trockensubstanz oder mindestens 42 % Massenanteil an Trockensubstanz; und
höchstens 60 % Massenanteil an Trockensubstanz, höchstens 55 % Massenanteil an Trockensubstanz, höchstens 50 % Massenanteil an Trockensubstanz oder höchstens 48 % Massenanteil an Trockensubstanz.

3. Verfahren nach Anspruch 1 oder 2, wobei Schritt (a) durchgeführt wird bei:
einem Druck von höchstens 15 psig (103 kPa), einem Druck von höchstens 30 psig (207 kPa), einem Druck von höchstens 45 psig (310 kPa), einem Druck von höchstens 60 psig (414 kPa) oder einem Druck von höchstens 75 psig (517 kPa); und
einer Temperatur im Bereich von 5 bis 50 °C, einer Temperatur im Bereich von 10 bis 40 °C, einer Temperatur im Bereich von 8 bis 25 °C, einer Temperatur im Bereich von 8 bis 20 °C oder einer Temperatur im Bereich von 5 bis 15 °C.

4. Verfahren nach einem der vorhergehenden Ansprüche, wobei Schritt (a) durchgeführt wird bei:
einem Konzentrationsfaktor von mindestens 2, einem Konzentrationsfaktor von mindestens 3, einem Konzentrationsfaktor von mindestens 3,5, einem Konzentrationsfaktor von mindestens 4, einem Konzentrationsfaktor von mindestens 4,5 oder einem Konzentrationsfaktor von mindestens 5, bezogen auf den Massenanteil an Trockensubstanz; und einem Konzentrationsfaktor von höchstens 10, einem Konzentrationsfaktor von höchstens 8, einem Konzentrationsfaktor von höchstens 7 oder einem Konzentrationsfaktor von höchstens 6, bezogen auf den Massenanteil an Trockensubstanz; und
einem Konzentrationsfaktor von mindestens 2, einem Konzentrationsfaktor von mindestens 3, einem Konzentrationsfaktor von mindestens 3,5, einem Konzentrationsfaktor von mindestens 4, einem Konzentrationsfaktor von mindestens 4,5 oder einem Konzentrationsfaktor von mindestens 5, bezogen auf den Massenanteil an Protein; und einem Konzentrationsfaktor von höchstens 10, einem Konzentrationsfaktor von höchstens 8, einem Konzentrationsfaktor von höchstens 7 oder einem Konzentrationsfaktor von höchstens 6, bezogen auf den Massenanteil an Protein.

5. Verfahren nach einem der vorhergehenden Ansprüche, wobei der Konzentrationsfaktor, bezogen auf den Massenanteil der Mineralstoffe, mindestens 3, mindestens 3,5, mindestens 4, mindestens 4,5, mindestens 5 beträgt; und höchstens 8, höchstens 7 oder höchstens 6 beträgt.

6. Verfahren nach einem der vorhergehenden Ansprüche, wobei ein Volumen des Milchkonzentrats:
höchstens 60 % eines Volumens des Milchprodukts;
höchstens 50 % eines Volumens des Milchprodukts;
höchstens 40 % eines Volumens des Milchprodukts;
höchstens 30 % eines Volumens des Milchprodukts; oder
höchstens 25 % eines Volumens des Milchprodukts beträgt.

7. Verfahren nach einem der vorhergehenden Ansprüche, wobei der Wärmebehandlungsschritt eine UHT-Sterilisation bei einer Temperatur im Bereich von 135 °C bis 145 °C für eine Zeitspanne im Bereich von 1 bis 10 Sekunden, eine UHT-Sterilisation bei einer Temperatur im Bereich von 148 °C bis 165 °C für eine Zeitspanne im Bereich von 0,05 bis 1 s oder eine UHT-Sterilisation bei einer Temperatur im Bereich von 150 °C bis 155 °C für eine Zeitspanne im Bereich von 0,08 bis 0,2 s umfasst.

8. Verfahren nach einem der Ansprüche 1-7, wobei der Wärmebehandlungsschritt eine UHT-Sterilisation mittels indirekter Erhitzung oder eine UHT-Sterilisation mittels direkter Dampfinjektion umfasst.

9. Verfahren nach einem der Ansprüche 1-7, wobei der Wärmebehandlungsschritt eine UHT-Sterilisation mittels direkter Dampfinfusion umfasst.

10. Verfahren nach einem der vorhergehenden Ansprüche, wobei das Milchprodukt aufweist:
einen Fettgehalt mit einem Massenanteil von 0,05 bis 10 % oder einen Fettgehalt mit einem Massenanteil von 0,1 bis 5 %;
einen Proteingehalt mit einem Massenanteil von 1 bis 15 %, einen Proteingehalt mit einem Massenanteil von 3 bis 10 %, einen Proteingehalt mit einem Massenanteil von 2 bis 8 % oder einen Proteingehalt mit einem Massenanteil von 3 bis 6 %;
einen Mineralstoffgehalt mit einem Massenanteil von 0,5 bis 2 %, einen Mineralstoffgehalt mit einem Massenanteil von 0,5 bis 1,5 % oder einen Mineralstoffgehalt mit einem Massenanteil von 0,5 bis 1%;
einen Laktosegehalt mit einem Massenanteil von höchstens 6 %, einen Laktosegehalt mit einem Massenanteil von höchstens 4 %, einen Laktosegehalt mit einem Massenanteil von höchstens 1 % oder einen Laktosegehalt mit einem Massenanteil von höchstens 0,1 %; und
einen Trockensubstanzgehalt mit einem Massenanteil von 5 bis 15 %, einen Trockensubstanzgehalt mit einem Massenanteil von 6 bis 12 %, einen Trockensubstanzgehalt mit einem Massenanteil von 7 bis 10 % oder einen Trockensubstanzgehalt mit einem Massenanteil von 8 bis 10 %.

11. Verfahren nach einem der vorhergehenden Ansprüche, wobei der Vorwärtsosmoseschritt unter Verwendung eines Membransystems mit Porengrößen von höchstens 0,001 µm durchgeführt wird.

12. Verfahren nach einem der vorhergehenden Ansprüche, wobei der Vorwärtsosmoseschritt eine Vorwärtsosmose-Ziehungslösung verwendet, die umfasst:
einen Massenanteil von 0,4 bis 1,5 % Milchmineralien;
einen Massenanteil von 0,3 bis 3 % Milchmineralien;
einen Massenanteil von 0,3 bis 5 % Milchmineralien;
einen Massenanteil von 18 bis 32 % Milchmineralien;
einen Massenanteil von 10 bis 50 % Milchmineralien; oder
einen Massenanteil von 5 bis 60 % Milchmineralien.

13. Verfahren nach einem der vorhergehenden Ansprüche, wobei der Vorwärtsosmoseschritt eine Vorwärtsosmose-Ziehungslösung verwendet, die eine RO-Retentatfraktion, eine NF-Permeatfraktion einer UF-Permeatfraktion oder eine Kombination davon umfasst.

14. Verfahren nach einem der vorhergehenden Ansprüche, wobei:
Schritt (a) das Unterziehen des Milchprodukts einer Vorwärtsosmose zur Bildung des Milchkonzentrats und einer verdünnten Ziehungslösung umfasst; und
das Verfahren ferner (c) das Entfernen mindestens eines Teils von Wasser aus der verdünnten Ziehungslösung zur Bildung einer Ziehungslösung umfasst.

15. Verfahren nach einem der vorhergehenden Ansprüche, wobei das Milchkonzentrat und die aseptische Milchzusammensetzung aufweisen:
einen Fettgehalt mit einem Massenanteil von 0,05 bis 10 % oder einen Fettgehalt mit einem Massenanteil von 0,1 bis 5 %;
einen Proteingehalt mit einem Massenanteil von 12 bis 32 %, einen Proteingehalt mit einem Massenanteil von 14 bis 28 %, einen Proteingehalt mit einem Massenanteil von 12 bis 20 % oder einen Proteingehalt mit einem Massenanteil von 20 bis 30 %;
einen Mineralstoffgehalt mit einem Massenanteil von 2 bis 5 %, einen Mineralstoffgehalt mit einem Massenanteil von 2,2 bis 4,8 % oder einen Mineralstoffgehalt mit einem Massenanteil von 2,5 bis 4,5 %;
einen Kohlenhydratgehalt mit einem Massenanteil von 2 bis 30 %, einen Kohlenhydratgehalt mit einem Massenanteil von 5 bis 15 % oder einen Kohlenhydratgehalt mit einem Massenanteil von 20 bis 30 %; und
einen Trockensubstanzgehalt mit einem Massenanteil von 35 bis 60 %, einen Trockensubstanzgehalt mit einem Massenanteil von 38 bis 50 % oder einen Trockensubstanzgehalt mit einem Massenanteil von 40 bis 55 %.

16. Verfahren nach einem der vorhergehenden Ansprüche, wobei das Milchkonzentrat und die aseptische Milchzusammensetzung aufweisen:
einen Natriumgehalt von 800 bis 2.000 ppm;
einen Kaliumgehalt von 5.000 bis 9.500 ppm;
einen Kalziumgehalt von 3.000 bis 8.000 ppm;
oder eine beliebige Kombination davon.

17. Verfahren zur Herstellung einer Milchpulverzusammensetzung, wobei das Verfahren umfasst:
das Verfahren nach einem der Ansprüche 1-16; und
Sprühtrocknung der aseptischen Milchzusammensetzung zur Bildung der Milchpulverzusammensetzung.

## Revendications

1. Procédé de production d'une composition laitière aseptique, le procédé comprenant les étapes consistant à :
(a) soumettre un produit laitier à une osmose directe à un facteur de concentration d'au moins 2, d'au moins 3, d'au moins 3,5, d'au moins 4, d'au moins 4,5, ou d'au moins 5, sur la base du % en poids de minéraux ; et
un facteur de concentration inférieur ou égal à 10, inférieur ou égal à 8, inférieur ou égal à 7, ou inférieur ou égal à 6, sur la base du % en poids de minéraux, pour obtenir un concentré laitier présentant au moins 35 % en poids de matière sèche ; et
(b) traiter par la chaleur le concentré laitier pour obtenir la composition laitière aseptique.

2. Procédé selon la revendication 1, dans lequel le concentré laitier et la composition laitière aseptique contiennent :
au moins 37 % en poids de matière sèche, au moins 38 % en poids de matière sèche, au moins 40 % en poids de matière sèche ou au moins 42 % en poids de matière sèche ; et
une proportion inférieure ou égale à 60 % en poids de matière sèche, inférieure ou égale à 55 % en poids de matière sèche, inférieure ou égale à 50 % en poids de matière sèche, ou inférieure ou égale à 48 % en poids de matière sèche.

3. Procédé selon la revendication 1 ou 2, dans lequel l'étape (a) est effectuée :
sous une pression manométrique inférieure ou égale à 15 psi (103 kPa), une pression manométrique inférieure ou égale à 30 psi (207 kPa), une pression manométrique inférieure ou égale à 45 psi (310 kPa), une pression manométrique inférieure ou égale à 60 psi (414 kPa), ou une pression manométrique inférieure ou égale à 75 psi (517 kPa) ; et
à une température dans une plage de 5 à 50 °C, une température dans une plage de 10 à 40 °C, une température dans une plage de 8 à 25 °C, une température dans une plage de 8 à 20 °C, ou une température dans une plage de 5 à 15 °C.

4. Procédé selon l'une quelconque des revendications précédentes, dans lequel l'étape (a) est effectuée à :
un facteur de concentration d'au moins 2, un facteur de concentration d'au moins 3, un facteur de concentration d'au moins 3,5, un facteur de concentration d'au moins 4, un facteur de concentration d'au moins 4,5, ou un facteur de concentration d'au moins 5, sur la base du % en poids de matière sèche ; et un facteur de concentration inférieur ou égal à 10, un facteur de concentration inférieur ou égal à 8, un facteur de concentration inférieur ou égal à 7, ou un facteur de concentration inférieur ou égal à 6, sur la base du % en poids de matière sèche ; et
un facteur de concentration d'au moins 2, un facteur de concentration d'au moins 3, un facteur de concentration d'au moins 3,5, un facteur de concentration d'au moins 4, un facteur de concentration d'au moins 4,5, ou un facteur de concentration d'au moins 5, sur la base du % en poids de protéine ; et un facteur de concentration inférieur ou égal à 10, un facteur de concentration inférieur ou égal à 8, un facteur de concentration inférieur ou égal à 7, ou un facteur de concentration inférieur ou égal à 6, sur la base du % en poids de protéines.

5. Procédé selon l'une quelconque des revendications précédentes, dans lequel le facteur de concentration, sur la base du % en poids de minéraux, est d'au moins 3, d'au moins 3,5, d'au moins 4, d'au moins 4,5, d'au moins 5 ; et inférieur ou égal à 8, inférieur ou égal à 7, ou inférieur ou égal à 6.

6. Procédé selon l'une quelconque des revendications précédentes, dans lequel un volume du concentré laitier est :
inférieur ou égal à 60 % d'un volume du produit laitier ;
inférieur ou égal à 50 % d'un volume du produit laitier ;
inférieur ou égal à 40 % d'un volume du produit laitier ;
inférieur ou égal à 30 % d'un volume du produit laitier ; ou
inférieur ou égal à 25 % d'un volume du produit laitier.

7. Procédé selon l'une quelconque des revendications précédentes, dans lequel l'étape consistant à traiter par la chaleur comprend une stérilisation UHT à une température dans une plage de 135 °C à 145 °C pendant une durée dans une plage de 1 à 10 secondes, une stérilisation UHT à une température dans une plage de 148 °C à 165 °C pendant une durée dans une plage de 0,05 à 1 s, ou une stérilisation UHT à une température dans une plage de 150 °C à 155 °C pendant une durée dans une plage de 0,08 à 0,2 s.

8. Procédé selon l'une quelconque des revendications 1-7, dans lequel l'étape consistant à traiter par la chaleur comprend une stérilisation UHT effectuée par chauffage indirect ou une stérilisation UHT effectuée par injection directe de vapeur.

9. Procédé selon l'une quelconque des revendications 1-7, dans lequel l'étape consistant à traiter par la chaleur comprend une stérilisation UHT effectuée par infusion directe de vapeur.

10. Procédé selon l'une quelconque des revendications précédentes, dans lequel le produit laitier présente :
une teneur en matières grasses de 0,05 à 10 % en poids, ou une teneur en matières grasses de 0,1 à 5 % en poids ;
une teneur en protéines de 1 à 15 % en poids, une teneur en protéines de 3 à 10 % en poids, une teneur en protéines de 2 à 8 % en poids, ou une teneur en protéines de 3 à 6 % en poids ;
une teneur en minéraux de 0,5 à 2 % en poids, une teneur en minéraux de 0,5 à 1,5 % en poids, ou une teneur en minéraux de 0,5 à 1 % en poids ;
une teneur en lactose inférieure ou égale à 6 % en poids, une teneur en lactose inférieure ou égale à 4 % en poids, une teneur en lactose inférieure ou égale à 1 % en poids, ou une teneur en lactose inférieure ou égale à 0,1 % en poids ; et
une teneur en matière sèche de 5 à 15 % en poids, une teneur en matière sèche de 6 à 12 % en poids, une teneur en matière sèche de 7 à 10 % en poids, ou une teneur en matière sèche de 8 à 10 % en poids.

11. Procédé selon l'une quelconque des revendications précédentes, dans lequel l'étape d'osmose directe est effectuée au moyen d'un système à membrane ayant des tailles de pores inférieures ou égales à 0,001 µm.

12. Procédé selon l'une quelconque des revendications précédentes, dans lequel l'étape d'osmose directe utilise une solution d'extraction pour osmose directe comprenant :
de 0,4 à 1,5 % en poids de minéraux du lait ;
de 0,3 à 3 % en poids de minéraux du lait ;
de 0,3 à 5 % en poids de minéraux du lait ;
de 18 à 32 % en poids de minéraux du lait ;
de 10 à 50 % en poids de minéraux du lait ; ou
de 5 à 60 % en poids de minéraux du lait.

13. Procédé selon l'une quelconque des revendications précédentes, dans lequel l'étape d'osmose directe utilise une solution d'extraction pour osmose directe comprenant une fraction de rétentat d'osmose inverse, une fraction de perméat de nanofiltration provenant d'une fraction de perméat d'ultrafiltration, ou une association de celles-ci.

14. Procédé selon l'une quelconque des revendications précédentes, dans lequel :
l'étape (a) comprend le fait de soumettre le produit laitier à une osmose directe pour obtenir le concentré laitier et une solution d'extraction diluée ; et
le procédé comprend en outre l'étape (c) consistant à éliminer au moins une partie de l'eau à partir de la solution d'extraction diluée, pour obtenir une solution d'extraction.

15. Procédé selon l'une quelconque des revendications précédentes, dans lequel le concentré laitier et la composition laitière aseptique présentent :
une teneur en matières grasses de 0,05 à 10 % en poids, ou une teneur en matières grasses de 0,1 à 5 % en poids ;
une teneur en protéines de 12 à 32 % en poids, une teneur en protéines de 14 à 28 % en poids, une teneur en protéines de 12 à 20 % en poids, ou une teneur en protéines de 20 à 30 % en poids ;
une teneur en minéraux de 2 à 5 % en poids, une teneur en minéraux de 2,2 à 4,8 % en poids, ou une teneur en minéraux de 2,5 à 4,5 % en poids ;
une teneur en glucides de 2 à 30 % en poids, une teneur en glucides de 5 à 15 % en poids, ou une teneur en glucides de 20 à 30 % en poids ; et
une teneur en matière sèche de 35 à 60 % en poids, une teneur en matière sèche de 38 à 50 % en poids, ou une teneur en matière sèche de 40 à 55 % en poids.

16. Procédé selon l'une quelconque des revendications précédentes, dans lequel le concentré laitier et la composition laitière aseptique présentent :
une teneur en sodium de 800 à 2 000 ppm ;
une teneur en potassium de 5 000 à 9 500 ppm ;
une teneur en calcium de 3 000 à 8 000 ppm ;
ou une combinaison quelconque de telles teneurs.

17. Procédé de production d'une composition laitière en poudre, le procédé comprenant :
le procédé selon l'une quelconque des revendications 1-16 ; et
le séchage par atomisation de la composition laitière aseptique pour obtenir la composition laitière en poudre.
